# EUROPEAN PATENT APPLICATION

(11) **EP 1 679 487 A1**
(43) Date of publication of application: **12.07.2006**
(21) Application number: 04792688.6
(22) Date of filing: 20.10.2004
(51) Int. Cl.: G01C 21/00

(54) **NAVIGATION DEVICE, NAVIGATION METHOD, AND NAVIGATION PROGRAM**

(30) Priority: 23.10.2003 JP 2003363517
(71) Applicant: Navitime Japan Co., Ltd., Tokyo 101-0051 (JP)
(72) Inventor: SUZUKI, Yusuke c/o NAVITIME JAPAN CO., LTD., Chiyoda-ku Tokyo 101-0054 (JP); ONISHI, Keisuke; c/o NAVITIME JAPAN CO., LTD., Chiyoda-ku Tokyo 101-0054 (JP); KIKUCHI, Shin; c/o NAVITIME JAPAN CO., LTD., Chiyoda-ku Tokyo 101-0051 (JP)
(74) Representative: HOFFMANN EITLE
(86) International application number: PCT/JP2004/015522
(87) International publication number: WO 2005/040722

(57) **Abstract**

A navigation device (100), which performs a route guidance, includes: a GPS unit (114) that acquires information about the current location by performing a communication with a global positioning system (GPS); a navigation-information acquiring unit (160) that acquires map data and route data from a navigation server (300) in a network (200); a guidance controller (120) that determines whether the information about the current location is acquired, and when the information is acquired, performs the route guidance based on the information; a GPS-communication controller (150) that cuts off the communication with the GPS when it is determined that the information about the current location is not acquired; and a server-communication controller (170) that cuts of a communication with the navigation server (300) when it is determined that the information about the current location is not acquired, thereby reducing power consumption and communication charges when the current location cannot be determined.

## Description

### TECHNICAL FIELD

The present invention relates to a navigation device, a navigation method, and a navigation program.

### BACKGROUND ART

A conventional navigation device, such as a car navigation system, has a function of searching a route from a place of departure to a destination. Generally, such a navigation device also has a function of rerouting (researching a route afterwards) when a current location that is determined by a global positioning system (GPS) is deviated by more than a predetermined distance from a route that was searched and selected at the place of departure. The rerouting is performed automatically, since an operation of the navigation device by a user while driving the vehicle is dangerous.

Some navigation devices perform the automatic rerouting under a predetermined condition. For example, the following patent document 1 discloses a technology that does not perform the rerouting when a vehicle is near any point on the route to the destination, even if the vehicle has deviated from the route. Moreover, the following patent document 2 discloses a technology that displays, according to a request from a user, a new route that was researched and stored in the navigation device in the background (irrespective of whether the automatic rerouting setting has been done or not) when the vehicle was deviated from a route to the destination.

Moreover, the following patent document 3 discloses a technology that does not perform the rerouting when a vehicle is near a turnoff on a recommended route, even if the vehicle has deviated from the route.

On the other hand, in recent years, a navigation device not only for a car driver but also for a user who is walking or taking a train or a bus has been proposed (refer to the following patent document 3, for example).
Patent document 1: Japanese Patent Application Laid-open Publication No. H8-159797
Patent document 2: Japanese Patent Application Laid-open Publication No. H9-152352
Patent document 3: Japanese Patent Application Laid-open Publication No. 2000-241182
Patent document 4: Japanese Patent Application Laid-open Publication No. 2000-258184

### DISCLOSURE OF THE INVENTION

### PROBLEMS TO BE SOLVED BY THE INVENTION

Generally, such a navigation device are mounted on a portable telephone, and such a portable navigation device, unlike a car navigation device, has a peculiar problem as explained below. That is, a user who is walking along the footway may be unable to receive radio waves (indicating the current location) from the GPS satellite, because the radio waves tend to be blocked by buildings. As a result, the current location shown on a screen of the portable navigation device cannot be accurate (for example, a mark indicating the current location can hop within the screen).

Moreover, the portable navigation device, which does not have an autonomous navigation sensor as mounted on a vehicle, tends to snake. It is difficult to acquire precise data on traveling of the portable navigation device, and thereby to display precise current location thereof.

Further, it is difficult to perform an accurate map matching since the intervals between the footways, which can be narrower than the roads subjected to route searching for a vehicle, on a map can be very small.

Thus, such a portable navigation device has a lower accuracy in determining the current location than that of a general car navigation device. Therefore, it is not possible to perform route guidance accurately even if the communication with the GPS satellite is continued and power is consumed in the communication. Particularly, in the portable navigation device, unnecessary power consumption is a major problem since a battery capacity thereof is small.

Further, the portable navigation device cannot hold map data, which is subjected to a route search and is displayed on a screen, since the storage area thereof is limited. When performing route guidance or displaying a map, the portable navigation device establishes a communication with a navigation server, which is connected to the portable navigation device via a network and stores the map data, to receive the map data or a route data.

Therefore, the portable navigation device has to com municate with the navigation server whenever the current location is not determined or the user selects a route largely different from the recommended route, thereby increasing communication charges with the navigation server.

The present invention is made in a view of the abovementioned problem, and it is an object of the present invention to provide a navigation device, a navigation method, and a navigation program that can reduce power consumption as well as communication charges when the current location cannot be determined.

### MEANS TO SOLVE THE PROBLEMS

To solve the problem and achieve the object, a navigation device according to an aspect of the present invention, which performs a route guidance based on a route that is selected from among a plurality of routes to a destination including a walking route, includes: a location acquiring unit that acquires information about a current location by performing a communication with a global positioning system; a guidance-control unit that determines whether the information about the current location is acquired by the location acquiring unit, and when determining that the information about the current location is acquired, performs the route guidance based on the information about the current location; and a global-positioning-system-communication controlling unit that cuts of the communication with the global positioning system when the guidance-control unit determines that the information about the current location is not acquired.

A navigation device according to another aspect of the present invention, which performs a route guidance based on a route that is selected from among a plurality of routes to a destination including a walking route, includes: a location acquiring unit that acquires information about a current location by performing a communication with a global positioning system; a guidance-information acquiring unit that acquires information about the route selected from a server that is connected to a network and stores information about the routes; a guidance-control unit that determines whether the information about the current location is acquired by the location acquiring unit, and when determining that the information about the current location is acquired, performs the route guidance based on the information about the current location and the information about the route selected; and a server-communication controlling unit that cuts off a communication with the server when the guidance-control unit determines that the information about the current location is not acquired.

A navigation method according to still another aspect of the present invention, which is for performing a route guidance based on a route that is selected from among a plurality of routes to a destination including a walking route, includes: acquiring information about a current location by performing a communication with a global positioning system; determining whether the information about the current location is acquired at the acquiring; performing the route guidance based on the information about the current location when it is determined at the determining that the information about the current location is acquired; and cutting of the communication with the global positioning system when it is determined at the determining that the information about the current location is not acquired.

A navigation method according to still another aspect of the present invention, which is for performing a route guidance based on a route that is selected from among a plurality of routes to a destination including a walking route, includes: acquiring information about a current location by performing a communication with a global positioning system; acquiring information about the route selected from a server that is connected to a network and stores information about the routes; determining whether the information about the current location is acquired at the acquiring; performing the route guidance based on the information about the current location and the information about the route selected when it is determined at the determining that the information about the current location is acquired; and cutting off a communication with the server when it is determined at the determining that the information about the current location is not acquired.

A navigation program according to still another aspect of the present invention, which is for performing a route guidance based on a route that is selected from among a plurality of routes to a destination including a walking route, causes a computer to execute: determining whether information about a current location is acquired by performing a communication with a global positioning system; performing the route guidance based on the information about the current location when it is determined that the information about the current location is acquired; and cutting off the communication with the global positioning system when it is determined that the information about the current location is not acquired.

A navigation program according to still another aspect of the present invention, which is for performing a route guidance based on a route that is selected from among a plurality of routes to a destination including a walking route, causes a computer to execute: acquiring information about the route selected from a server that is connected to a network and stores information about the routes; determining whether information about a current location is acquired by performing a communication with a global positioning system; performing the route guidance based on the information about the current location when it is determined that the information about the current location is acquired; and cutting off a communication with the server when it is determined that the information about the current location is not acquired.

### EFFECTS DUE TO THE INVENTION

According to the present invention, information about the current location is acquired by performing communication with a global positioning system (GPS). Then it is determined whether the information about the current location is acquired, and when the information about the current location is acquired, a route guidance is performed based on the information about the current location. When the information about the current location is not acquired, the communication with the GPS is cut off. As a result, when the route guidance cannot be performed since the current location cannot be acquired, the communication with the GPS does not performed, thereby reducing power consumption.

Moreover, according to the present invention, the information about the current location is acquired by performing the communication with the GPS, whereas information about a selected route is acquired from a server that is connected to a network and stores information about routes. Then it is determined whether the information about the current location is acquired, and when the information about the current location is acquired, the route guidance is performed based on the information about the current location and the information on the selected route. When the route guidance cannot be performed since the information about the current location cannot be acquired, the communication with the server is cut off not to receive map information and route information from the server, thereby reducing communication charges.

### BRIEF DESCRIPTION OF THE DRAWINGS

Fig. 1 is a block diagram of a navigation system including a navigation device according to an embodiment of the present invention.
Fig. 2 is a flowchart of an overall procedure of route guidance performed by the navigation system.
Fig. 3 is a flowchart of a route guidance process performed by the navigation device.
Fig. 4 is a flowchart of a route guidance process performed by a guidance controller.
Fig. 5 is an example of a display screen of a message of termination.
Fig. 6 is an example of a menu screen.

### DESCRIPTION OF SIGNS

100 navigation device
110 display unit
111 voice output unit
112 voice input unit
114 GPS unit
115 communication unit
116 input unit
117, 617 controlling unit
120 guidance controller
130 display controller
140 guiding voice controller
150 GPS-communication controller
160 navigation-information acquiring unit
170 server-communication controller
200 network
300 navigation server
310 map delivery unit
320 map database
330 route searching unit

### BEST MODE FOR CARRYING OUT THE INVENTION

Exemplary embodiments of a navigation device, a navigation method, and a navigation program are described below in detail with reference to the accompanying drawings. The navigation devices according to the embodiments are a portable telephone in which the navigation program according to the present invention installed.

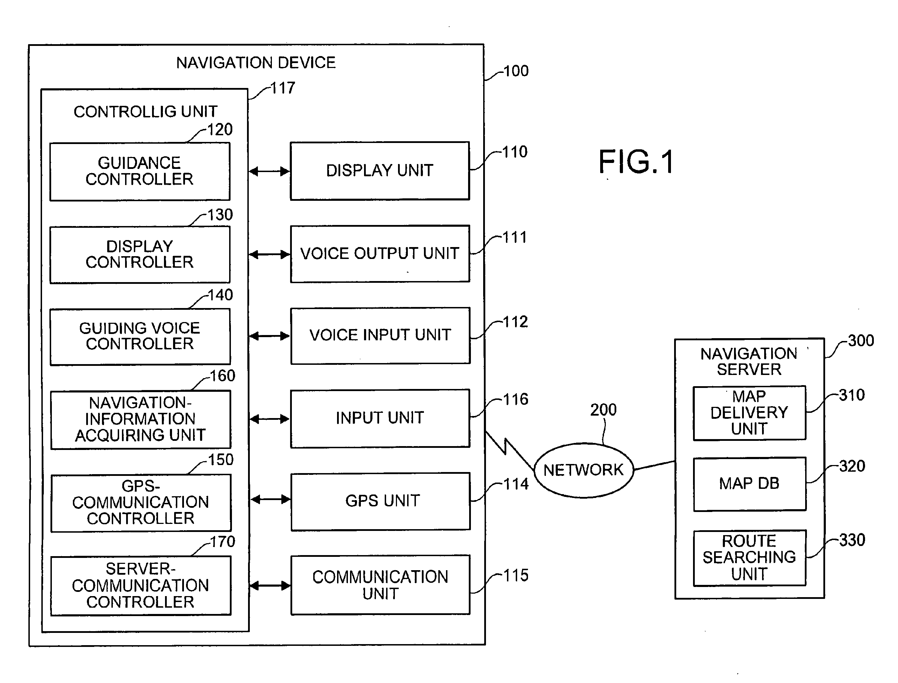

Fig. 1 is a block diagram of a navigation system including a navigation device according to a first embodiment. As shown in Fig. 1, the navigation system includes a navigation device 100, a network 200, and a navigation server 300.

The network 200 is a network such as a portable telephone network and the Internet. The navigation device 100 and the navigation server 300 can exchange various data via the network 200.

The navigation device 100 according to the first embodiment is a portable navigation device that also functions as a portable telephone, and includes a display unit 110, a voice output unit 111, a voice input unit 112, GPS unit 114, a communication unit 115, an input unit 116, and a controlling unit 117.

The display unit 110 has a Liquid Crystal Display (LCD) and displays various information (such as map data) supplied from the controlling unit 117. The voice output unit 111 has a speaker and outputs voice data supplied from the controlling unit 117. The voice input unit 112 has a microphone, creates voice data corresponding to a voice input by a user, and outputs the voice data to the controlling unit 117. The voice input unit 112 is used for inputting voice of the user when the navigation device 100 functioning as a telephone.

The GPS unit 114 has a GPS antenna etc. and outputs information about the current location, which includes coordinates of the current location that are determined based on information received from a satellite, to a guidance controller 120 of the controlling unit 117. When the GPS unit 114 could not have acquired the information about the current location due to defective communication, it outputs error information to the guidance controller 120. The GPS unit 114 performs communication and cutting-off the communication with a GPS satellite by radio waves under the control of a GPS communication controller 150.

The communication unit 115 has a structure similar to that of a general portable telephone. The communication unit 115 includes an antenna and transfers various data (such as voice data and map data) to and from other communication terminal (such as a portable telephone and a Web server) via the network 200 under a control of the controlling unit 117. The input unit 116 has a numerical pad, creates a signal according to an operation by the user, and outputs the signal to the controlling unit 117. A server-communication controller 170 of the controlling unit 117 controls the communication unit 115 to establish or cut off communication with the navigation server 300 via the network 200.

The controlling unit 117 has a Central Processing Unit (CPU) and a storage unit such as a Read Only Memory (ROM) and a Random Access Memory (RAM). The controlling unit 117 controls the entire navigation device 100 (in other words, each unit of the device) so that the navigation device 100 functions as the portable telephone, by executing a navigation program that is stored in the storage unit.

Moreover, the controlling unit 117 of the navigation device 100 according to the first embodiment controls each unit to execute navigation functions such as a map display and a route guidance. More concretely, the controlling unit 117 includes a guidance controller 120, a display controller 130, a guiding voice controller 140, a GPS-communication controller 150, a navigation-information acquiring unit 160, and the server-communication controller 170. Here, the navigation-information acquiring unit 160 forms a guidance-information acquiring unit according to the present invention.

The display controller 130 creates display data based on map data delivered from the navigation server 300, and controls the display unit 110 to display the map data. Moreover, the display controller 130 creates display data of various information necessary for navigation, such as characters and patterns. The display unit 110 displays the display data created by the display controller 130, thereby displaying a map indicating a route to be guided, or characters such as "turn to the right".

The guiding voice controller 140 outputs voice data, which corresponds to a voice to be output from the voice output unit 111, to the voice output unit 111 at a predetermined timing during route guidance. For example, when a user of the navigation device 100 comes to a point 30m before an intersection where it is supposed to take a right turn, the guiding voice controller 140 outputs the voice data of a voice such as "right turn at next intersection".

Thus, according to the first embodiment, the display unit 110, the voice output unit 111, the display controller 130, the guiding voice controller 140 perform route guidance for guiding the user along the route, under the control of the guidance controller 120.

The guidance controller 120 controls the above units as mentioned above to perform route guidance. More concretely, the guidance controller 120 controls each unit based on the current location notified by the GPS unit 114 and a route selected by the navigation server 300, and causes the units to display guidance information or to provide voice guidance.

Moreover, the guidance controller 120 determines whether the GPS unit 114 has acquired the information about the current location by an input from the GPS unit 114. In other words, if the input from the GPS unit 114 includes the coordinates of the location, the guidance controller 120 determines that the GPS unit 114 has acquired the information about the current location, and performs the route guidance. On the other hand, if the input from the GPS unit 114 includes error information, the guidance controller 120 determines that the GPS unit 114 has not acquired the information about the current location. In this case, the guidance controller 120 calculates the number of errors, and if the number of errors has reached 4 or more than 4, outputs to the GPS-communication controller 150 a request to cut off the communication with the GPS, and outputs to the server-communication controller 170 a request to cut off the communication with the navigation server 300.

An upper limit of the number of errors is not restricted to 4 and can be set voluntarily.

Furthermore, the guidance controller 120 determines whether the coordinates of the current location input from the GPS unit 114 are deviated by more than a predetermined distance (for example, more than 100 m) from the route selected by the user from among a plurality of routes to the destination, by comparing the coordinates of the route and coordinates of the current location.

The current location can be deviated from the route by more than the predetermined distance not only when the user has deviated from the route intentionally, but also when the current location is wrongly identified since precise coordinates of the current location cannot be acquired from the GPS, and when the current location is displayed wrongly on a map in a map matching process.

When determining that the information about the current location input from the GPS unit 114 is deviated by more than the predetermined distance from the route selected by the user, the guidance controller 120 calculates the number of errors. When the number of errors reaches 4 or more than 4, the guidance controller 120 outputs a request to the GPS-communication controller 150 to cut off the communication with the GPS, and outputs a request to the server-communication unit 170 to cut off the communication with the navigation server 300.

An upper limit of the number of errors is not restricted to 4 and can be set voluntarily. Moreover, the distance between the route and the current location is not restricted to 100 m and can be set voluntarily.

The navigation-information acquiring unit 160 makes an access to the navigation server 300 via the communication unit 115 and the network 200, and makes a request for sending information necessary for navigation such as map data for displaying a map on the display unit 110, and data indicating a result of route search from a place of departure to a destination.

More concretely, the navigation-information acquiring unit 160, which acquires information on the current location periodically from the GPS unit 114, sends a request for map data including the current location to the navigation server 300 if the navigation-information acquiring unit 160 has not yet received the map. The navigation-information acquiring unit 160 also sends to the navigation server 300 a request for route search that includes information necessary for route search, such as the place of departure (it can be the current location or can be set by the user), the destination, a point of passing, and other search conditions such as search priority (shorter time/low cost).

Then, the navigation-information acquiring unit 160 acquires the result of the route search and the map data that is sent from the navigation server 300 responding to the request, and supplies it to the display controller 130.

The GPS-communication controller 150 starts communication with the GPS when the user instructs to start the route guidance through an initial menu (not shown). On the other hand, the GPS-communication controller 150 cuts off the communication with the GPS when a request to cut off the communication is input from the guidance controller 120. As a result, the GPS unit 114 does not receive radio waves from the GPS satellite any more.

The server-communication controller 170 establishes communication with the navigation server 300 when the start of the route guidance is selected in an initial menu (not shown in the diagram). On the other hand, the server-communication controller 170 cuts off the communication with the navigation server 300 when the guidance controller 120 requests, to stop receiving any data from the navigation server 300.

Next, the navigation server 300 is described. The navigation server 300, as shown in Fig. 1, includes a map delivery unit 310, a map database (DB) 320, and a route searching unit 330.

The map database 320 is a database that stores the map data. The map delivery unit 310, when receiving a request from the navigation device 100 (or other navigation device) including the current location thereof, acquires map data including the current location and sends the map data to the navigation device 100 via the network 200.

The route searching unit 330, when receiving a request for route search from the navigation device 100, searches a plurality of routes up to the destination from the place of departure (the destination and the place of departure are included in the request), and sends the result of the route search to the navigation device 100 via the network 200. The route searching unit 330 of the navigation server 300 according to the first embodiment can search not only a car route but also other routes such as a walking route, a bus route, a train route, and a combination thereof. The car route means a route for a vehicle that the user can drive anywhere he/she wants, such as a vehicle for private use and a motorcycle, and does not include a bus route etc. that is determined in advance.

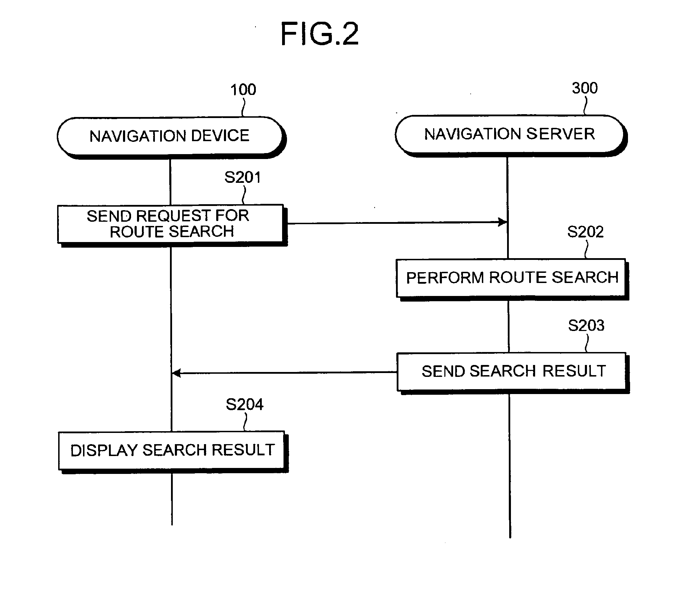

Next, a process of route guidance performed by the navigation system, which includes the navigation device 100 and the navigation server 300 according to the first embodiment, is described. Fig. 2 is a flowchart of overall process of route guidance performed by the navigation system according to the first embodiment.

The user of the navigation device 100 according to the first embodiment inputs in the navigation device 100, through the input unit 116, search conditions such as a place of departure and a destination, and makes a request for route search. The navigation device 100 sends the request for route search, which includes the search conditions, to the navigation server 300 via the network 200 (step S201).

The navigation server 300, which has received the request for route search from the navigation device 100, performs route search according to the search conditions included in the request for route search (step S202). Then the navigation server 300 sends the result of route search to the navigation device 100 via the network 200 (step S203).

The navigation device 100, which has received the result of route search, displays a search result screen on the display unit 110 (step S204).

In the search result screen, the user can input instructions such as "start route guidance" or "check route map" through the input unit 116 of the navigation device 100.

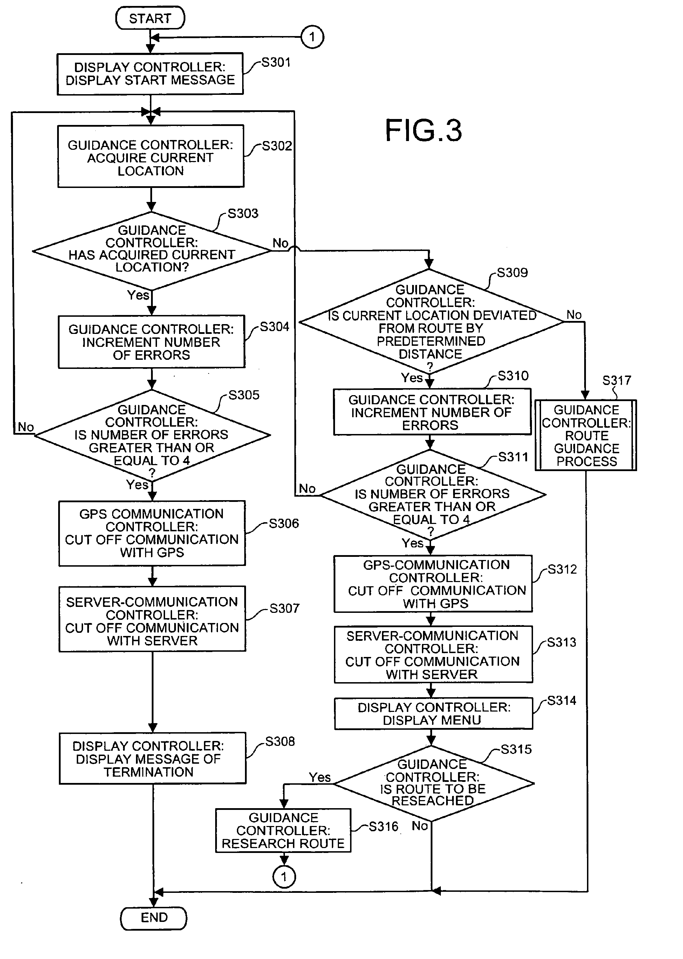

Next, a route guidance process that is performed by the navigation device 100 according to the first embodiment is described. Fig. 3 is a flowchart of the route guidance process performed by the navigation device 100.

When the user instructs the navigation device 100 to start the route guidance through the initial menu (not shown), a start message is displayed on the display unit 110 under the control of the display controller 130 (step S301). Then, the guidance controller 120 acquires the information about the current location from the GPS unit 114, which receives the information from the GPS satellite and outputs it to the guidance controller 120 (step S302).

Next, the guidance controller 120 determines whether the acquisition of the information about the current location has failed, by checking the information includes error information or coordinates of the current location (step S303). When the information from the GPS unit 114 includes error information, the guidance controller 120 determines that the acquisition of the information about the current location has failed (Yes at step S303), and increments the number of errors (step S304).

Next, till the number of errors reaches 4 (No at step S305), the guidance controller 120 repeats the acquisition of the information about the current location, the determination of whether the acquisition has failed or not, and incrementing the number of errors. Then, when the number of errors reaches 4 (Yes at step S305), in other words, when the acquisition of the information about the current location from the GPS satellite fails continuously for four times, the guidance controller 120 outputs the request to the GPS-communication controller 150 to cut off the communication. The GPS-communication controller 150, which has received the request, cuts off the communication with the GPS (step S306). Afterwards, the navigation device 100 does not receive radio waves from the GPS satellite.

Next, the guidance controller 120 outputs the request to cut off the communication to the server-communication controller 170. The server-communication controller 170, which receives the request, cuts off the communication with the navigation server 300 in the network 200 (step S307). Afterwards, the navigation device 100 does not receive the map data and route data from the navigation server 300.

Then, a message of termination is output to the display unit 110 by the display controller 130 (step S308), and the route guidance process is terminated.

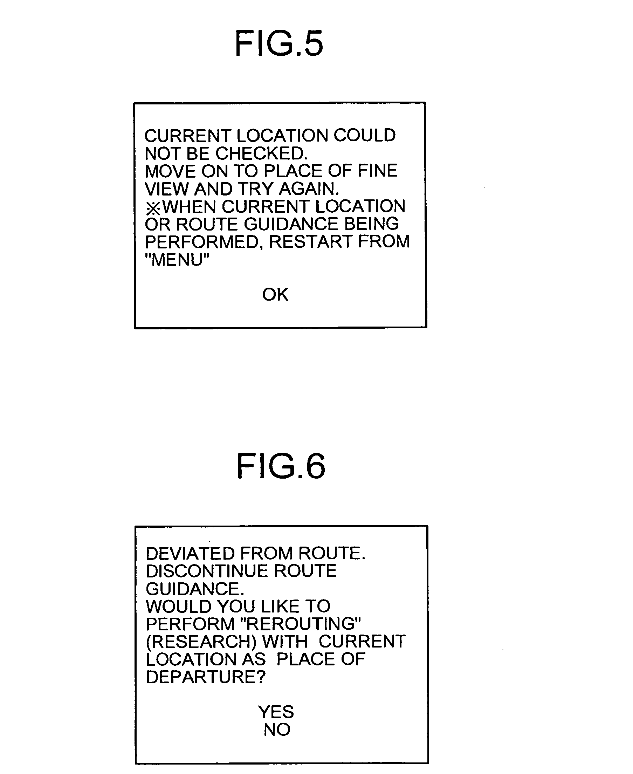

Fig. 5 is an example of a display screen of the message of termination. As shown in Fig. 5, on the termination message display screen, a message to the effect that the current location could not be checked is displayed.

Therefore, when a condition of being unable to acquire the information about the current location continues successively, the communication with the GPS is cut off and the map data and the route data are not received from the navigation server 300. As a result, the route guidance process is not performed.

At step S303, if the information about the current location that includes the location coordinates could have been acquired by the guidance controller 120 from the GPS unit 114 (No at step S303), the guidance controller 120 compares the location coordinates of the information about the current location acquired and location coordinates of the route that the user selected, and determines whether the current location is deviated from the route by more than the predetermined distance or not (for example 100 m) (step S309). Then, if it is determined to be deviated by more than the predetermined distance, (Yes at step S309), the guidance controller 120 determines it to be an error, and increases the number of errors just by 1 (step S310).

Any voluntary distance can be determined as the predetermined distance. In a case of a portable navigation, the current location is indicated wrongly and tends to be map matched with an adjacent road and the current location tends to fluctuate.

On the other hand, a traveling velocity is slow during walking, and when the user realizes having mistaken the route, it is possible to return to a correct route from that location.

Moreover, the user can take enough time to have a look at the screen and determines whether the route has been mistaken or not. Therefore, it is not necessary to perform an automatic researching of the route immediately. If the route and the current location that is deviated from the route are displayed on the display unit 110 of the navigation device, the user can return to the correct route. Moreover, since the user, unlike a driver of a vehicle, can check a situation around, in a case where the current location is temporarily displayed wrongly without doubt, since it is possible to continue walking while noticing the display, it is not necessary to perform the automatic researching of the route immediately. Therefore, about 100 m is a desirable distance for determining whether deviated from the route or not. Next, till the number of errors becomes 4 or more than 4 (step S311), the guidance controller 120 acquires repeatedly the information about the current location, determines whether the acquisition of the information about the current location has failed or not, determines whether the current location is deviated from the route by the predetermined distance, and increases the number of errors (No at step S311). Then, when the number of errors reaches 4 or more than 4 (Yes at step S311), in other words, if the current location is determined successively for four time to have been deviated by more than the predetermined distance, it outputs the request to the GPS-communication controller 150 to cut off the communication, and the

GPS-communication controller 150 that receives this request cuts off the communication with the GPS (step S312). Afterwards, the navigation device 100 does not receive the satellite radio waves.

The determination of the current location being deviated from the route by more than the predetermined distance is made and the communication with the navigation server 300 and the GPS communication is cut off for trying to acquire once again the correct information about the current location for the reason that the user has not deviated from the route intentionally, but because for not being able to acquire the correct information about the current location, and when the current location is identified wrongly and is displayed upon deviating from the correct current location on the display unit 110.

Next, the guidance controller outputs to the server-communication controller 170 the request to cut off the communication, and the server-communication controller 170 that receives the request cuts of the communication with the navigation server 300 in the network 200 (step S313).
Afterwards, the navigation device 100 does not receive the map data and the route data from the navigation server 300.

Further, the display controller 130 displays a menu on the display unit 110 (step S314). Fig. 6 is an example of the menu screen. Since the current location is deviated from the route (route), a message of whether a rerouting (researching of the route) is to be performed or not is displayed on the menu screen as shown in Fig. 6.

Next, the guidance controller 120 determines whether the researching of the route is designated by an input by the user from the menu screen (step S315). If the user selects "Yes" on the menu screen, it means that the researching of the route is designated (Yes at step S315), and the guidance controller 120 performs a researching process of the route up to a destination from the current location that is deviated from the route (step S316), and then the process returns to step S301.

On the other hand, if the user selects "No" on the menu screen, it means that the researching of the route is not designated (No at step S315), and the researching of the route is not performed, and the process is terminated.

At step S309, when the guidance controller 120 does not determine that the current location is deviated from the route by more than the predetermined distance (No at step S309), the route guidance process by the guidance controller 120 is performed (step S317).

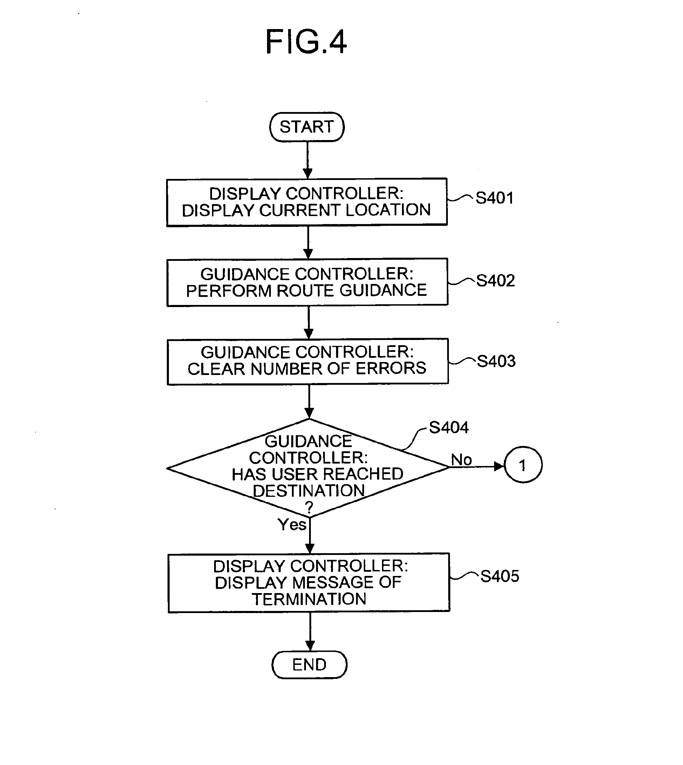

Fig. 4 is a flowchart that indicates a procedure of the route guidance process at step S317.

To start with, the display controller 130 displays by superimposing the current location on the map that is displayed on the display unit 110 (step S401). Next, the route guidance is performed by the guidance controller 120 (step S402), and the number of errors when the acquisition of the current location has failed and the number of errors when the current location is deviated from the route by more than the predetermined distance, are initialized (step S403). Then, the guidance controller 120 determines whether the user has reached the destination (step S404). If it is determined that the user has reached the destination (Yes at step S404), the message of termination (not shown in the diagram) is displayed on the display unit 110 by the display controller 130 (step S405).

If it is determined that the user does not have reached the destination (No at step S404), the process returns to step S301 in Fig. 3, and a process of acquiring the information about the current location is repeated.

Thus, in the navigation device 100 according to the embodiment, since the GPS unit 114 acquires the information about the current location by the communication with the GPS, the guidance controller 120 determines whether the information about the current location is acquired or not, if it is determined not to have acquired the information about the current location, the GPS-communication controller 150 cuts off the communication with the GPS, and the server-communication controller 170 cuts off the communication with the navigation server 300, if the current location cannot be acquired and if the route guidance becomes impossible, it is possible to reduce the unnecessary power consumption, moreover, it becomes unnecessary to receive the map data from the navigation server 300, and it is possible to reduce the load of the communication charges.

Moreover, in the navigation device 100 according to the embodiment, if the current location is identified wrongly, or if the user intentionally is deviated from the route up to the destination and the current location is away from the route by more than the predetermined distance, since the GPS-communication controller 150 cuts off the communication with the GPS and the server-communication controller 170 cuts of the communication with the navigation server 300, it is possible to reduce the unnecessary power consumption, moreover it becomes unnecessary to receive the map data from the navigation server 300, and it is possible to reduce the load of the communication charges.

Moreover, the navigation device 100 according to the embodiment cuts off the communication with the GPS and the navigation device 100 when the acquisition of the information about the current location has failed or the current location has been deviated for four times. However, the communication with the GPS and the communication with the navigation server 300 can be cut off immediately, without counting the number of errors, after the acquisition of the information about the current location has failed or the current location has been deviated.

Particularly, when the communication with the GPS and the communication with the navigation device 100 are cut off immediately after the current location has been deviated, the communication with the GPS and the communication with the navigation device 100 are cut off immediately, it becomes possible to improve an efficiency of the process when the user has deviated intentionally from the route.

Moreover, according to the embodiment, the CPU of a controlling unit has been let to perform a process including a guidance process as mentioned above according to a computer program that is stored in a storage unit of the ROM, however an arrangement may be made to provide a computer program for causing a computer to perform a similar process, to the user by a communication line such as the internet, or an arrangement may be made to record the computer program on a computer readable recording medium such as a CD-ROM (Compact

Disc-Read only Memory) and to provide to the user. Moreover, the navigation device may be structured to realize by a dedicated hardware line that performs the process mentioned above, and be provided to the user.

### INDUSTRIAL APPLICABILITY

Thus, a navigation device, a navigation method, and a navigation program according to the present invention are useful in route guidance using a portable navigation device.

## Claims

1. A navigation device that performs a route guidance based on a route that is selected from among a plurality of routes to a destination including a walking route, the navigation device comprising:
a location acquiring unit that acquires information about a current location by performing a communication with a global positioning system;
a guidance-control unit that determines whether the information about the current location is acquired by the location acquiring unit, and when determining that the information about the current location is acquired, performs the route guidance based on the information about the current location; and
a global-positioning-system-communication controlling unit that cuts of the communication with the global positioning system when the guidance-control unit determines that the information about the current location is not acquired.

2. The navigation device according to claim 1, wherein the global-positioning-system-communication controlling unit cuts off the communication with the global positioning system when the guidance-control unit has determined that the information about the current location is not acquired for a predetermined number of times.

3. The navigation device according to claim 1 or 2, wherein
the guidance-control unit determines whether the current location is deviated from the route selected, by a predetermined distance, based on the information about the current location acquired by the location-information acquiring unit and information about a location of the route selected, and
the global-positioning-system-communication controlling unit cuts off the communication with the global positioning system when the guidance-control unit determines that the current location is deviated from the route selected by the predetermined distance.

4. The navigation device according to claim 3, wherein the global-positioning-system-communication controlling unit cuts off the communication with the global positioning system when the guidance-control unit has determined that the information about the current location is not acquired for a predetermined number of times.

5. A navigation device that performs a route guidance based on a route that is selected from among a plurality of routes to a destination including a walking route, the navigation device comprising:
a location acquiring unit that acquires information about a current location by performing a communication with a global positioning system;
a guidance-information acquiring unit that acquires information about the route selected from a server that is connected to a network and stores information about the routes;
a guidance-control unit that determines whether the information about the current location is acquired by the location acquiring unit, and when determining that the information about the current location is acquired, performs the route guidance based on the information about the current location and the information about the route selected; and
a server-communication controlling unit that cuts off a communication with the server when the guidance-control unit determines that the information about the current location is not acquired.

6. The navigation device according to claim 5, wherein the server-communication controlling unit cuts off the communication with the server when the guidance-control unit has determined that the information about the current location is not acquired for a predetermined number of times.

7. The navigation device according to claim 5 or 6, wherein
the guidance-control unit determines whether the current location is deviated from the route selected, by a predetermined distance, based on the information about the current location acquired by the location-information acquiring unit and information about a location of the route selected, and
the server-communication controlling unit cuts off the communication with the server when the guidance-control unit determines that the current location is deviated from the route selected by the predetermined distance.

8. The navigation device according to claim 7, wherein the server-communication controlling unit cuts off the communication with the server when the guidance-control unit has determined that the information about the current location is not acquired for a predetermined number of times.

9. A navigation method for performing a route guidance based on a route that is selected from among a plurality of routes to a destination including a walking route, the navigation method comprising:
acquiring information about a current location by performing a communication with a global positioning system;
determining whether the information about the current location is acquired at the acquiring;
performing the route guidance based on the information about the current location when it is determined at the determining that the information about the current location is acquired; and
cutting of the communication with the global positioning system when it is determined at the determining that the information about the current location is not acquired.

10. A navigation method for performing a route guidance based on a route that is selected from among a plurality of routes to a destination including a walking route, the navigation method comprising:
acquiring information about a current location by performing a communication with a global positioning system;
acquiring information about the route selected from a server that is connected to a network and stores information about the routes;
determining whether the information about the current location is acquired at the acquiring;
performing the route guidance based on the information about the current location and the information about the route selected when it is determined at the determining that the information about the current location is acquired; and
cutting off a communication with the server when it is determined at the determining that the information about the current location is not acquired.

11. A navigation program for performing a route guidance based on a route that is selected from among a plurality of routes to a destination including a walking route, the navigation program causes a computer to execute:
determining whether information about a current location is acquired by performing a communication with a global positioning system;
performing the route guidance based on the information about the current location when it is determined that the information about the current location is acquired; and
cutting off the communication with the global positioning system when it is determined that the information about the current location is not acquired.

12. A navigation program for performing a route guidance based on a route that is selected from among a plurality of routes to a destination including a walking route, the navigation program causes a computer to execute:
acquiring information about the route selected from a server that is connected to a network and stores information about the routes;
determining whether information about a current location is acquired by performing a communication with a global positioning system;
performing the route guidance based on the information about the current location when it is determined that the information about the current location is acquired; and
cutting off a communication with the server when it is determined that the information about the current location is not acquired.
